# EUROPÄISCHE PATENTANMELDUNG

(11) **EP 1 647 782 A2**
(43) Veröffentlichungstag der Anmeldung: **19.04.2006**
(21) Anmeldenummer: 05021874.2
(22) Anmeldetag: 07.10.2005
(51) Int. Cl.: F24J 2/52

(54) **Befestigungsvorrichtung für mindestens einen Sonnenkollektor**

(30) Priorität: 13.10.2004 DE 202004015811 U
(71) Anmelder: ROBERT BOSCH GMBH, 70442 Stuttgart (DE)
(72) Erfinder: Otting, Herbert, 49832 Beesten (DE)

(57) **Zusammenfassung**

Die Erfindung betrifft eine Befestigungsvorrichtung für mindestens einen Sonnenkollektor mit einer Abwinklung (1) an der Unterseite des einfassenden Rahmens (2), insbesondere zur so genannten Überdach- und Flachdachmontage, bestehend aus mindestens einer Trägerschiene zur Befestigung auf zugeordneten Dachhaken oder anderen Montagesystemen.

Der Erfindung liegt daher die Aufgabe zugrunde, die so genannte Überdach- und Flachdachmontage von Sonnenkollektoren zu optimieren.

Erfindungsgemäß wird daher ein in oder an einer etwa U-förmigen Profilschiene (3) geführtes Unterteil (4, 4'), über mindestens einen mit mindestens einer Sollbruchstelle (5) versehenen Steg (6) am Unterteil (4, 4') oder an einem Distanzelement, auf Abstand zu einem in den Rahmen (2) eines Sonnenkollektors eingreifenden Oberteil (7, 7') gehalten. Dabei sorgt mindestens eine die Teile vertikal durchgreifende Schraube (8) bei der Montage für Vorspannkraft, so dass der Steg (6) am Unterteil (4, 4') oder am Distanzelement an der Sollbruchstelle (5) bricht.

## Beschreibung

Die Erfindung betrifft eine Befestigungsvorrichtung für mindestens einen Sonnenkollektor nach dem Oberbegriff des Schutzanspruches 1.

Gattungsgemäße Befestigungsvorrichtungen für mindestens einen Sonnenkollektor, insbesondere zur so genannten Überdach- und Flachdachmontage, bestehen im Wesentlichen aus mindestens einer Profilschiene als Träger zur Aufnahme von Sonnenkollektoren. Bei der Überdachmontage werden die Profilschienen auf zugeordneten Dachhaken befestig, welche in die Lattung der Dacheindeckung eingreifen. In der Regel kommen mindestens zwei parallel ausgerichtete Profilschienen zum Einsatz, um daran ein Kollektorfeld, bestehend aus mehreren Sonnenkollektoren, zu befestigen. Zum Beispiel ergeben sich bereits mit vier Dachhaken und zwei Montageschienen als horizontal oder vertikal auf der Dachfläche ausgerichtete Träger Anschraubmöglichkeiten für Sonnenkollektoren. Bekannt sind daher Sonnenkollektoren mit einer vorzugsweise nach außen gerichteten Abwinklung an der Unterseite des einfassenden Rahmens, welche mit entsprechenden Durchbrechungen für eine Schraubverbindung oder zum Eingriff von Befestigungsteilen versehen sind.

Die Profilschienen sollten eine Verschiebbarkeit der Sonnenkollektoren bei der Montage ermöglichen. Dies ist wichtig, um beispielsweise die Rohrverbindungen zwischen den Sonnenkollektoren einfach herzustellen und das gesamte Kollektorfeld für einen guten optischen Eindruck genau auszurichten. Weil die Montagearbeiten teilweise unter ungünstigen Bedingungen auf schrägen Dachflächen und meistens auch mit geringstmöglichem Personalaufwand erfolgen müssen, wird generell ein hoher Vorfertigungsgrad aller Bauteile angestrebt.

Bekannte Befestigungsvorrichtungen für Sonnenkollektoren erforderten aber teilweise viele spezielle Kleinteile, welche bei der Handhabung möglicherweise leicht verloren gingen und auch eine entsprechende Schulung bzw. Erfahrung beim Personal voraussetzten. Außerdem war nicht immer gewährleistet, dass die Sonnenkollektoren nach dem Auflegen auf die Trägerkonstruktion noch geringfügig verschoben werden konnten, oder dass beim Lösen von Verbindungen zum Verschieben das Gewicht der Sonnenkollektoren gleichzeitig noch sicher abgetragen wurde.

Der Erfindung liegt daher die Aufgabe zugrunde, insbesondere die so genannte Überdach- und Flachdachmontage von Sonnenkollektoren zu optimieren.

Erfindungsgemäß wurde dies mit den Merkmalen des Patentanspruches 1 gelöst. Vorteilhafte Weiterbildungen sind den Unteransprüchen zu entnehmen.

Die Befestigungsvorrichtung ist gekennzeichnet durch ein in einer etwa U-förmigen Profilschiene geführtes Unterteil, welches über mindestens einen mit mindestens einer Sollbruchstelle versehenen Steg am Unterteil oder an einem Distanzelement auf Abstand zu einem in den Rahmen eines Sonnenkollektors eingreifenden Oberteil gehalten ist. Mindestens eine die Teile vertikal durchgreifende Schraube sorgt beim Anziehen für eine entsprechende Vorspannkraft, so dass der Steg am Unterteil oder am Distanzelement, an der Sollbruchstelle bricht.

Wenn das Oberteil bei einer ersten Ausführungsvariante auf einer Seite in den Rahmen von Sonnenkollektoren eingreifen soll, besitzt das Unterteil zwei vertikale, zueinander parallele Seitenflächen als Führung in einer Profilschiene sowie eine federnd als Rasthaken ausgebildete, nur einseitig zwischen den beiden Seitenflächen angeformte Bodenfläche. Diese rastet in eine zugeordnete Lochung in der unteren Fläche der Profilschiene ein. Das Unterteil ist zwischen zwei vertikalen, zueinander parallelen Seitenflächen mit einem diese innen verbindenden, horizontal verlaufenden Steg versehen. Dieser bildet oberhalb eine horizontale Fläche zur Aufnahme einer einzulegenden Mutter, vorzugsweise in Form eines bekannten Nutensteines. Mit dem etwa der Höhe der Mutter entsprechenden Abstand ist darüber ein weiterer, nach innen hervorspringender Steg zugeordnet, welcher eine Bohrung zum Durchgriff der Schraube aufweist.

Das Oberteil liegt auf dem mit mindestens einer Sollbruchstelle versehenen Steg am Unterteil auf, wobei die Breite des nach oben zeigenden Endbereiches eines Steges etwa der Breite einer Längsöffnung an der Oberseite einer zugeordneten Profilschiene entspricht. Quer zur Profilschiene bzw. zum Unterteil greift das Oberteil auf einer Seite in den Rahmen eines Sonnenkollektors ein. Die Oberseite der Mutter sowie die Unterseite des Oberteils liegen im montierten Zustand an der zugeordneten Profilschiene an.

Bei einer zweiten Ausführungsvariante übergreift das Unterteil die Oberseite einer zugeordneten Profilschiene. Ober- und Unterteil werden von einer Schraube durchgriffen, welche in eine in der Profilschiene geführten Mutter, vorzugsweise in Form eines bekannten Nutensteines, eingreift. Bei dieser Ausführungsvariante greift das Oberteil auf zwei gegenüberliegenden Seiten, ebenfalls quer zur Verschieberichtung des Unterteils, in Rahmen von benachbarten Sonnenkollektoren ein. Das Unterteil besitzt hierbei an seiner Oberseite mindestens zwei vertikale Stege mit jeweils mindestens einer Sollbruchstelle. Diese Stege weisen an ihren freien Enden jeweils eine Abkröpfung zum Eingriff in jeweils eine zugeordnete Nut auf der Unterseite des Oberteils auf. Sie können parallel auf gegenüberliegenden Seiten, auf einer gemeinsamen Achse mit der Schraube oder symmetrisch um die Schraube im Zentrum angeordnet sein.

Bei allen Varianten ist das Oberteil an mindestens einer Längsseite, mindestens auf einem Teil der Länge, mit einem nach unten zeigenden Vorsprung versehen. Damit greift es in eine zugeordnete Abkantung an der Unterseite des Rahmens eines Sonnenkollektors ein. Wahlweise kann zwischen dem Oberteil und dem Unterteil eine Druckfeder eingesetzt werden, um das Oberteil nach dem Lösen der Schraube, beispielsweise zur Demontage eines Sonnenkollektors, wieder nach oben zu schieben.

Mit der Erfindung wird die Überdach- und Flachdachmontage von Sonnenkollektoren optimiert. Die Sonnenkollektoren können nach dem Auflegen auf die Trägerkonstruktion noch geringfügig verschoben werden und werden dabei von der Abrutschsicherung gehalten. Dabei sind die Befestigungsvorrichtungen bereits lose in die Profilschienen eingeschoben. Das Gewicht der Sonnenkollektoren wird dann sicher abgetragen und das Herstellen der Rohrverbindungen zwischen den Sonnenkollektoren sowie das Ausrichten des gesamten Kollektorfeldes ist sich dadurch sehr einfach. Das Personal wird entlastet, auch indem nun nur noch zwei verschiedene Befestigungsvorrichtungen benötigt werden. Deren Bestandteile sind aneinander unverlierbar fixiert.

Die Zeichnung stellt ein Ausführungsbeispiel der Neuerung dar. Es zeigt:

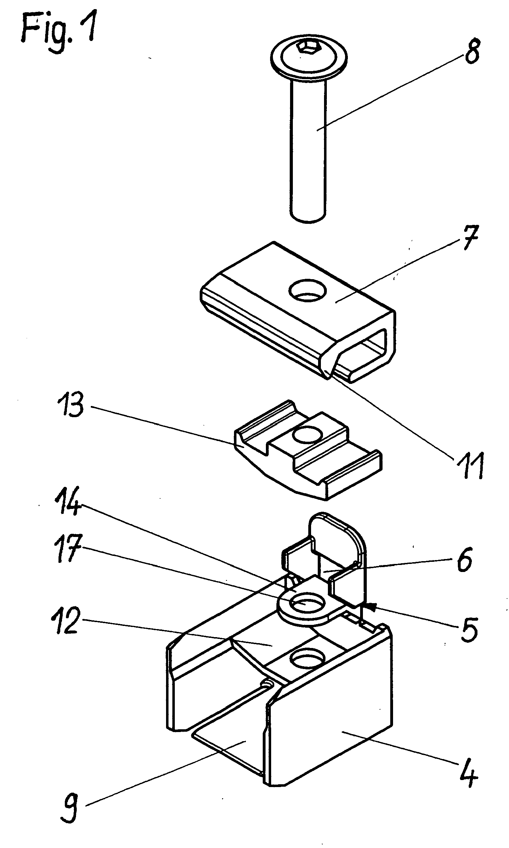

- Fig. 1:: In einer perspektivischen Darstellung eine Befestigungsvorrichtung für mindestens einen Sonnenkollektor in einer ersten Ausführungsvariante zum Eingriff in den Rahmen von Sonnenkollektoren auf einer Seite,
- Fig. 2:: die Befestigungsvorrichtung gemäß Fig. 1 in einem ersten Montageschritt,
- Fig. 3:: die Befestigungsvorrichtung gemäß Fig. 1 im zweiten Montageschritt und
- Fig. 4:: die Befestigungsvorrichtung gemäß Fig. 1 im dritten und vierten Montageschritt.
- Fig. 5:: In einer perspektivischen Darstellung eine Befestigungsvorrichtung für mindestens einen Sonnenkollektor in einer zweiten Ausführungsvariante zum beidseitigen Eingriff in Rahmen von benachbarten Sonnenkollektoren,
- Fig. 6:: die Befestigungsvorrichtung gemäß Fig. 5 in einem ersten Montageschritt,
- Fig. 7:: die Befestigungsvorrichtung gemäß Fig. 5 im zweiten Montageschritt und
- Fig. 8:: die Befestigungsvorrichtung gemäß Fig. 5 im dritten und vierten Montageschritt.

Die Befestigungsvorrichtung für mindestens einen Sonnenkollektor mit einer Abwinklung 1 an der Unterseite des einfassenden Rahmens 2, insbesondere zur so genannten Überdach- und Flachdachmontage, besteht aus mindestens einer etwa U-förmigen Profilschiene 3 als Träger zur Befestigung auf zugeordneten Dachhaken, welche in die Lattung der Dacheindeckung eingreifen. In bzw. an der Profilschiene 3 ist ein Unterteil 4, 4' geführt, welches über einen mit einer Sollbruchstelle 5 versehenen Steg 6 am Unterteil 4, 4' auf Abstand zu einem in den Rahmen 2 eines Sonnenkollektors eingreifenden Oberteil 7, 7' gehalten ist. Dabei wird mit einer vertikal die Teile durchgreifenden Schraube 8 bei der Montage eine Vorspannkraft erzeugt, so dass der Steg 6 am Unterteil 4, 4' an der Sollbruchstelle 5 bricht.

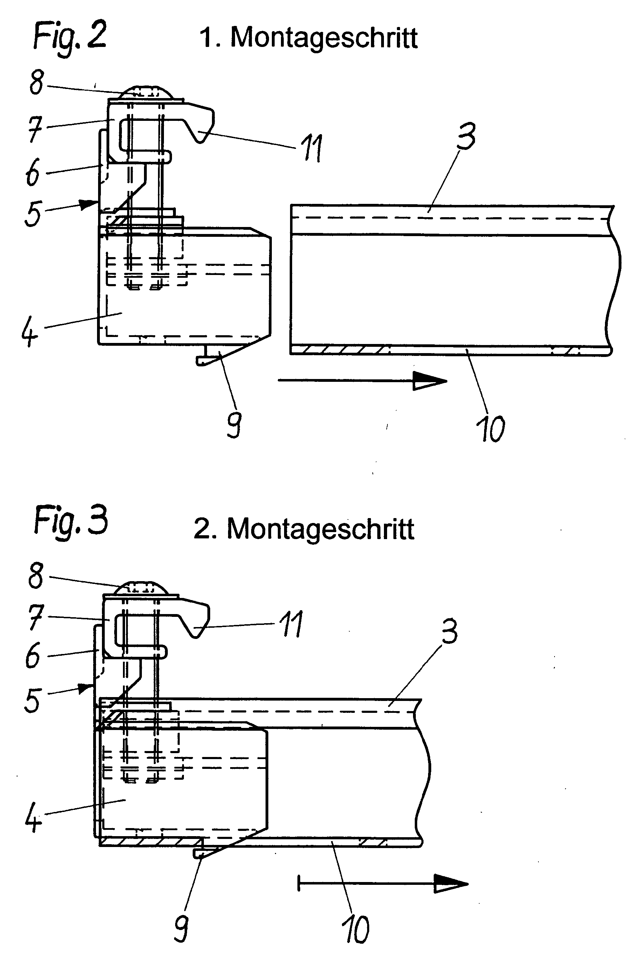

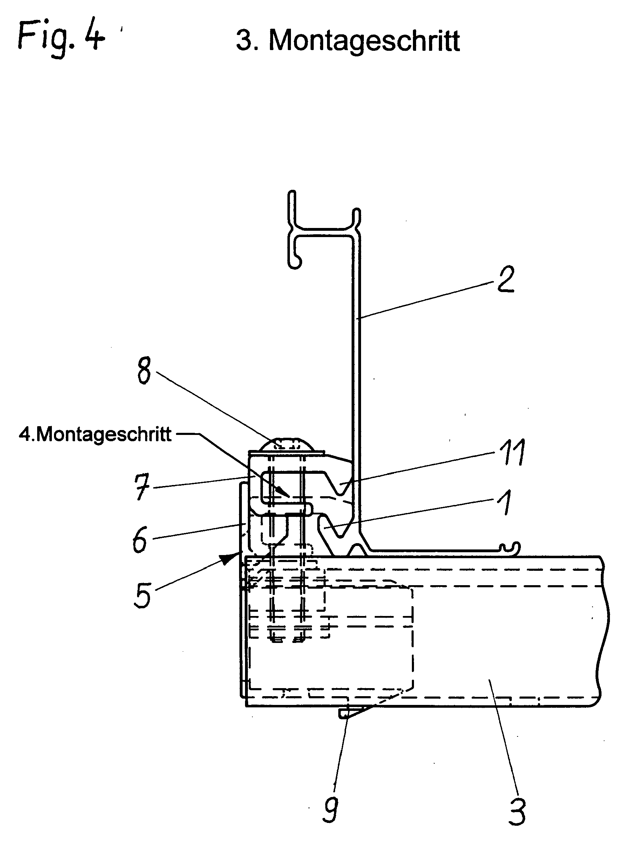

Gemäß Fig. 2 wird in einem ersten Montageschritt die Befestigungsvorrichtung in die Profilschiene 3 eingeschoben und etwas in einem zweiten Montageschritt gemäß Fig. 3 zurückgezogen. Dabei dienen die beiden parallelen Seitenflächen des Unterteils 4 als Führung und die als Rasthaken 9 gestaltete Bodenfläche des Unterteils 4 rastet in einem zugeordneten Langloch 10 in der Profilschiene 3 ein. Nun ist mit der Befestigungsvorrichtung ein Anschlag für die Montage des Sonnenkollektors geschaffen. Im nachfolgenden dritten Montageschritt gemäß Fig. 4 wird der Sonnenkollektor an den Anschlag geschoben und im vierten Montageschritt die Schraube 8 angezogen. Dabei bricht der Steg 6 am Unterteil 4, 4' an der Sollbruchstelle 5 und das Oberteil 7 verspannt den Sonnenkollektor mit der Profilschiene 3, wobei es mit einer Abkantung 11 in die zugeordnete Abwinklung 1 an der Unterseite des Rahmens 2 eingreift. Das Unterteil 4 ist zwischen zwei vertikalen, zueinander parallelen Seitenflächen mit einem diese innen verbindenden, horizontal verlaufenden Steg 12 versehen. Diese bilden oberhalb eine horizontale Fläche zur Aufnahme einer einzulegenden Mutter 13. Ein weiterer nach innen hervorspringender Steg 14 ist mit Abstand über dem Steg 12 angeordnet und diesem zugeordnet. Er weist eine Bohrung 17 zum Durchgriff der Schraube 8 auf.

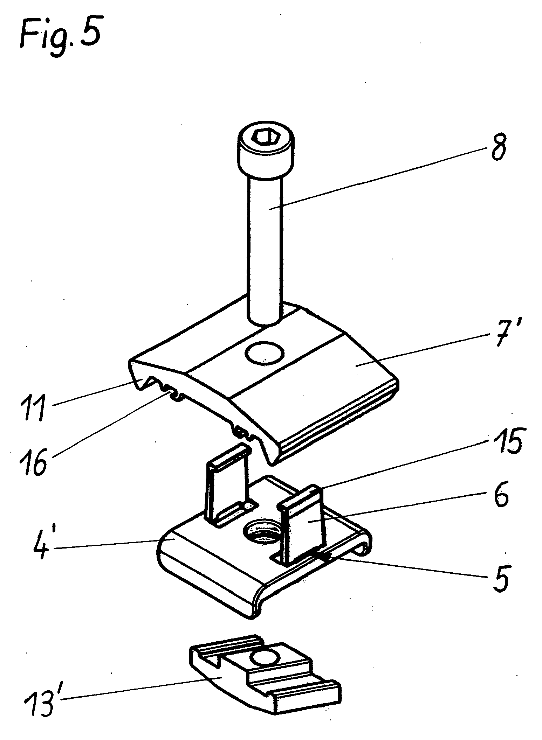

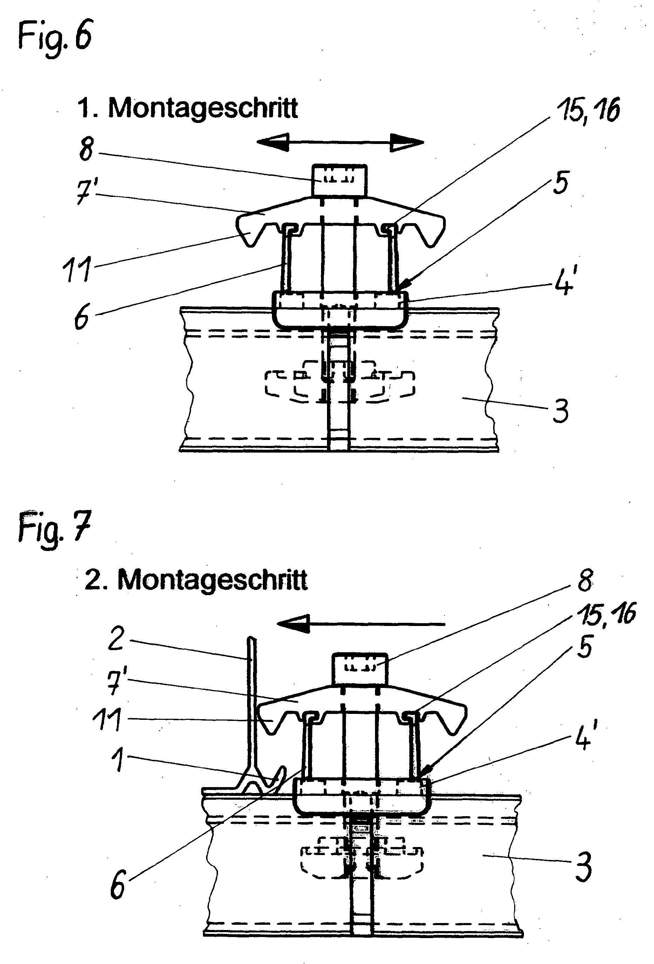

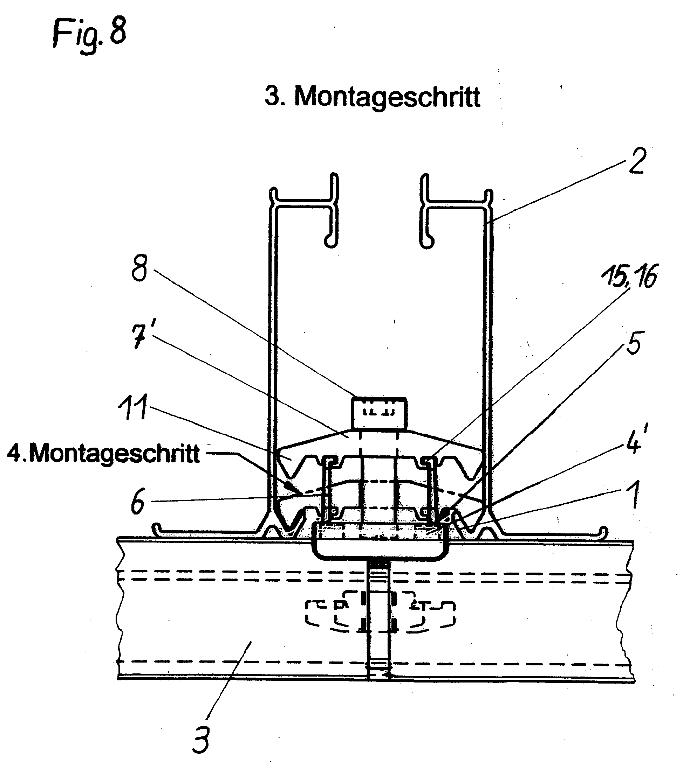

Bei der zweiten Ausführungsvariante zum beidseitigen Eingriff in Rahmen 2 von benachbarten Sonnenkollektoren gemäß Fig. 5 ist die Montage ähnlich: Gemäß Fig. 6 wird in einem ersten Montageschritt die Befestigungsvorrichtung mit dem Unterteil 4' auf die Profilschiene 3 gesetzt, so dass die Mutter 13' in Form eines Nutensteins in die Profilschiene 3 eingreift und die beiden nach unten abgewinkelten Seiten des Unterteils 4' die Führung bilden. Die Befestigungsvorrichtung ist somit axial verschiebbar und wird im zweiten Montageschritt gemäß Fig. 7 an den ersten Sonnenkollektor heran geschoben. Im nachfolgenden dritten Montageschritt gemäß Fig. 8 wird auch der zweite Sonnenkollektor bis an die Befestigungsvorrichtung geschoben, bevor im vierten Montageschritt die Schraube 8 angezogen wird. Dabei dreht sich die Mutter 13' in der Profilschiene und greift unter deren Innenrand. Beim weiteren Anziehen der Schraube 8 brechen die Stege 6 an der Sollbruchstelle 5 vom Unterteil 4' ab, das Oberteil 7' greift mit seinen beidseitigen Abkantungen 11 in die zugeordneten Abwinklungen 1 an den Rahmen 2 ein und sorgt für einen sicheren Halt an der Profilschiene 3. Um die Befestigungsvorrichtung als montagefertige Einheit bereit zu stellen, sind die Stege 6 an ihren freien Enden jeweils mit einer Abkröpfung 15 versehen, welche zum Eingriff in jeweils eine zugeordnete Nut 16 auf der Unterseite des Oberteils 7' dienen.

## Patentansprüche

1. Befestigungsvorrichtung für mindestens einen Sonnenkollektor mit einer Abwinklung (1) an der Unterseite des einfassenden Rahmens (2), insbesondere zur so genannten Überdach- und Flachdachmontage, bestehend aus mindestens einer Trägerschiene zur Befestigung auf zugeordneten Dachhaken oder anderen Montagesystemen,
**gekennzeichnet durch** ein in oder an einer etwa U-förmigen Profilschiene (3) geführtes Unterteil (4, 4'), welches über mindestens einen mit mindestens einer Sollbruchstelle (5) versehenen Steg (6) am Unterteil (4, 4') oder an einem Distanzelement auf Abstand zu einem in den Rahmen (2) eines Sonnenkollektors eingreifenden Oberteil (7, 7') gehalten ist, wobei mindestens eine die Teile vertikal durchgreifende Schraube (8) bei der Montage für Vorspannkraft sorgt, so dass der Steg (6) am Unterteil (4, 4') oder am Distanzelement an der Sollbruchstelle (5) bricht.

2. Befestigungsvorrichtung nach Anspruch 1,
**dadurch gekennzeichnet, dass** das Unterteil (4) zwei vertikale, zueinander parallele Seitenflächen als Führung in einer Profilschiene (3) sowie eine federnd als Rasthaken (9) ausgebildete, nur einseitig zwischen den beiden Seitenflächen angeformte Bodenfläche zum Einrasten in eine Profilschiene (3) besitzt.

3. Befestigungsvorrichtung nach einem der Ansprüche 1 oder 2,
**dadurch gekennzeichnet, dass** das Unterteil (4) zwischen zwei vertikalen, zueinander parallelen Seitenflächen mit einem diese innen verbindenden, horizontal verlaufenden Steg (12) versehen ist, welcher oberhalb eine horizontale Fläche zur Aufnahme einer einzulegenden Mutter (13) bildet, und dem beabstandet darüber, ein weiterer nach innen hervorspringender Steg (14) zugeordnet ist, welcher eine Bohrung (17) zum Durchgriff der Schraube (8) aufweist.

4. Befestigungsvorrichtung nach einem der Ansprüche 1 bis 3,
**dadurch gekennzeichnet, dass** das Oberteil (7) auf dem mit mindestens einer Sollbruchstelle (5) versehenen Steg (6) am Unterteil (4) aufliegt, wobei die Breite des nach oben zeigenden Endbereiches eines Steges (6) etwa der Breite einer Längsöffnung an der Oberseite einer zugeordneten Profilschiene (3) entspricht, und dass das Oberteil (7), quer zur Profilschiene (3) und zum Unterteil (4), auf einer Seite in den Rahmen (2) von Sonnenkollektoren eingreift.

5. Befestigungsvorrichtung nach einem der Ansprüche 1 bis 4,
**dadurch gekennzeichnet, dass** die Oberseite der Mutter (13) sowie die Unterseite des Oberteils (7) im montierten Zustand an der zugeordneten Profilschiene (3) anliegt.

6. Befestigungsvorrichtung nach Anspruch 1,
**dadurch gekennzeichnet, dass** das Unterteil (4') die Oberseite einer zugeordneten Profilschiene (3) übergreift, dass Ober- und Unterteil (7', 4') von einer Schraube (8) durchgriffen werden, dass die Schraube (8) in eine in der Profilschiene (13') geführten Mutter eingreift und dass das Oberteil (7') auf zwei gegenüberliegenden Seiten in den Rahmen (2) von Sonnenkollektoren eingreift.

7. Befestigungsvorrichtung nach einem der Ansprüche 1 oder 6,
**dadurch gekennzeichnet, dass** das Unterteil (4') an seiner Oberseite mindestens zwei vertikale Stege (6) mit mindestens einer Sollbruchstelle (5) besitzt, welche an ihren freien Enden jeweils eine Abkröpfung (15) zum Eingriff in jeweils eine zugeordnete Nut (16) auf der Unterseite des Oberteils (7') aufweisen.

8. Befestigungsvorrichtung nach einem der Ansprüche 1 bis 7,
**dadurch gekennzeichnet, dass** das Oberteil (7') an mindestens einer Längsseite, mindestens auf einem Teil der Länge, einen nach unten gerichteten Vorsprung (11) zum Eingriff in eine zugeordnete Abwinklung (1) an der Unterseite des Rahmens (2) eines Sonnenkollektors aufweist.

9. Befestigungsvorrichtung nach einem der Ansprüche 1 bis 8,
**dadurch gekennzeichnet, dass** zwischen dem Oberteil (7, 7') und dem Unterteil (4, 4') eine Druckfeder eingesetzt ist.
